# EUROPÄISCHE PATENTSCHRIFT

(11) **EP 2 588 934 B1**
(45) Veröffentlichungstag und Bekanntmachung des Hinweises auf die Patenterteilung: **25.02.2015**
(21) Anmeldenummer: 11725721.2
(22) Anmeldetag: 09.06.2011
(51) Int. Cl.: G06F 1/32, G05B 19/042

(54) **VERFAHREN ZUM BETRIEB EINES PROZESSORS IN EINER ECHTZEITUMGEBUNG**
METHOD FOR OPERATING A PROCESSOR IN A REAL-TIME ENVIRONMENT
PROCÉDÉ DE FONCTIONNEMENT D'UN PROCESSEUR DANS UN ENVIRONNEMENT TEMPS RÉEL

(30) Priorität: 02.07.2010 DE 102010025884
(43) Veröffentlichungstag der Anmeldung: 08.05.2013
(73) Patentinhaber: Siemens Aktiengesellschaft, 80333 München (DE)
(72) Erfinder: HILDNER, Christian, 90455 Nürnberg (DE)
(86) Internationale Anmeldenummer: PCT/EP2011/059616
(87) Internationale Veröffentlichungsnummer: WO 2012/000765

(56) Entgegenhaltungen:
- EP-A1- 1 785 808
- WO-A2-2009/148472
- US-A1- 2008 114 967

## Beschreibung

Echtzeitumgebungen sind Einsatzfälle von Computern oder ähnlichen Datenverarbeitungseinrichtungen, die ein bestimmtes Ergebnis oder eine Reaktion nicht nur korrekt, sondern auch garantiert innerhalb eines vorbestimmten Zeitraums liefern müssen, um einen reibungslosen Ablauf einer Anlage, beispielsweise eines Roboters, sicherzustellen.

Moderne, leistungsfähige Prozessoren, die in Computern eingesetzt werden, weisen häufig hohe Verlustleistungen mit entsprechender Wärmeentwicklung auf. Daher ist häufig ein Energiesparmodus oder Ruhezustand vorgesehen, in den die Prozessoren geschaltet werden können, wenn sie vorübergehend nicht benötigt werden.

In Echtzeitumgebungen können Energiesparmodi moderner Prozessoren allerdings meist nicht benutzt werden, da die für das Wiederhochfahren des Prozessors aus dem Ruhezustand in einen Betriebszustand erforderliche Aufwachzeit die Latenzzeit des Systems beeinträchtigt, so dass Timing-Erfordernisse gegebenenfalls nicht eingehalten werden. Die Latenzzeit ist der Zeitraum zwischen einem Echtzeitereignis, beispielsweise einem Sensorsignal und dem spätesten zulässigen Zeitpunkt der erforderlichen Reaktion auf das Echtzeitereignis.

WO 2009/148472 A2 offenbart eine elektronische Vorrichtung mit einem Prozessor und einem Energiesparplaner, der eine Ereignistabelle verwaltet, in der terminierte Ereignisse und für jedes dieser Ereignisse ein Zeitstempel und eine Toleranzzeitdauer gespeichert werden. Gemäß den in der Ereignistabelle gespeicherten Zeitstempeln und Toleranzzeitdauern wird der Betrieb des Prozessors zwischen einem Ruhezustand und einem Betriebszustand gewechselt.

US 2008/0114967 A1 offenbart eine integrierte Schaltkreisvorrichtung mit thermischen Sensoren, Rechenblöcken und einem Steuerungsblock zur Steuerung des Betriebs der Rechenblöcke in Abhängigkeit von Signalen der thermischen Sensoren.

Es ist daher eine Aufgabe der Erfindung, ein verbessertes Verfahren zum Betrieb eines Prozessors in einer Echtzeitumgebung anzugeben.

Die Aufgabe wird erfindungsgemäß gelöst durch ein Verfahren mit den Merkmalen des Anspruchs 1.

Vorteilhafte Weiterbildungen sind Gegenstand der Unteransprüche.

Bei einem erfindungsgemäßen Verfahren zum Betrieb eines Prozessors in einer Echtzeitumgebung wird der Prozessor nach Behandlung eines Echtzeitereignisses von einem Betriebszustand in einen Ruhezustand (auch Energiesparmodus, low power state oder idle state genannt) geschaltet, wobei ein Hilfssignal bei einem nahe bevorstehenden Eintreten eines nachfolgenden Echtzeitereignisses generiert wird, mittels dessen der Prozessor vor dem Eintreten des nachfolgenden Echtzeitereignisses in den Betriebszustand (auch Volllastmodus oder full operation mode genannt) geschaltet wird. Auf das erwartete Echtzeitereignis kann somit trotz Verwendung des Ruhezustands mit minimaler Latenzzeit reagiert werden. Durch den Ruhezustand kann Energie gespart und die Wärmeabgabe verringert werden.

Bei einer ersten Ausführungsform des Verfahrens zum Betrieb eines Prozessors in einer Echtzeitumgebung wird der Prozessor nach Behandlung eines ersten Echtzeitereignisses von einem Betriebszustand in einen Ruhezustand geschaltet. Das Hilfssignal wird von einem Zeitgeber generiert. Nach Ablauf eines Differenzintervalls, das ein bekanntes Zeitintervall zwischen zwei aufeinanderfolgenden Echtzeitereignissen abzüglich eines Sicherheitsintervalls umfasst, wird der Prozessor durch den Zeitgeber in den Betriebszustand geschaltet, so dass auf das erwartete Echtzeitereignis mit minimaler Latenzzeit reagiert werden kann. Diese Ausführungsform eignet sich für Echtzeitumgebungen mit wohlbekanntem Timing-Verhalten, das heißt solche Echtzeitumgebungen, bei denen das genaue Zeitintervall zwischen zwei Echtzeitereignissen bekannt ist. Auf diese Weise kann Energie gespart und die Wärmeabgabe verringert werden.

Das Sicherheitsintervall ist so zu wählen, dass der Prozessor beim Eintreten des Echtzeitereignisses sicher in den Betriebszustand geschaltet und zur Bearbeitung des Echtzeitereignisses bereit ist. Vorzugsweise wird das Sicherheitsintervall in einem Bereich zwischen 10 % und 30 %, insbesondere 20 % der Dauer des bekannten Zeitintervalls zwischen zwei aufeinanderfolgenden Echtzeitereignissen gewählt. Beispielsweise kann das bekannte Zeitintervall zwischen zwei Echtzeitereignissen fünf Sekunden betragen. Als Sicherheitsintervall wird beispielsweise eine Sekunde gewählt, so dass der Prozessor für das Differenzintervall von vier Sekunden in den Ruhezustand geschaltet wird.

In einer weiteren Ausführungsform des Verfahrens zum Betrieb eines Prozessors in einer Echtzeitumgebung behandelt der Prozessor Echtzeitereignisse in Form eines Signals mindestens eines Sensors. Das Signal wird vom Sensor generiert, wenn dieser eine Überschreitung oder Unterschreitung eines vorgegebenen Schwellwertes einer Größe detektiert. Nach Behandlung eines ersten Echtzeitereignisses wird der Prozessor von einem Betriebszustand in einen Ruhezustand geschaltet. Weiterhin ist mindestens ein Hilfssensor vorgesehen, der die gleiche Größe überwacht, jedoch eine Überschreitung beziehungsweise Unterschreitung eines vorgegebenen Hilfsschwellwertes der Größe detektiert und daraufhin das Hilfssignal generiert. Der Hilfsschwellwert ist dabei so gewählt, dass er während der Änderung des Wertes der Größe vor dem Schwellwert erreicht wird. Durch das Hilfssignal wird der Prozessor in den Betriebszustand geschaltet, so dass er beim anschließenden Erreichen des Schwellwertes bereit ist, auf das Echtzeitereignis, das heißt das Signal des Sensors, zu reagieren. Diese Ausführungsform stellt für Echtzeitanwendungen, bei denen das Zeitintervall zwischen aufeinanderfolgenden Echtzeitereignissen nicht bekannt ist oder variiert, sicher, dass die Latenzzeit eingehalten wird. Auch bei dieser Ausführungsform kann Energie gespart und die Wärmeabgabe des Prozessors verringert werden.

Die vom Sensor und vom Hilfssensor überwachte Größe kann eine Strecke sein, wobei der Schwellwert eine Position ist, deren Erreichen das Echtzeitereignis darstellt. Der Hilfsschwellwert ist dann eine Hilfsposition, die beim Abfahren der Strecke vor der Position erreicht wird.

Die Echtzeitanwendung kann beispielsweise eine motorbetriebene Anwendung sein. Ein Antriebsmotor bewirkt dabei während seines Betriebes eine Änderung der durch den Sensor und den Hilfssensor überwachten Größe. Beispielsweise wird durch den Antrieb des Motors die Strecke abgefahren. Infolge des Erreichens der vom Sensor detektierten Position schaltet der Prozessor den Antriebsmotor ab. Damit die Abschaltung präzise erfolgt, muss die Latenzzeit eingehalten werden. Dies wird durch die weitere Ausführungsform des Verfahrens sichergestellt.

Jedem Sensor können zwei Hilfssensoren zugeordnet werden, von denen einer die Überschreitung des vorgegebenen Hilfsschwellwertes der Größe vor Überschreitung des Schwellwertes detektiert, wobei der andere Hilfssensor die Unterschreitung eines anderen vorgegebenen Hilfsschwellwertes der Größe vor Unterschreitung des Schwellwertes detektiert. Beispielsweise kann so eine Annäherung an die Position aus zwei Richtungen detektiert werden.

Die Ausführungsformen des Verfahrens können vorteilhaft in einem Roboter verwendet werden.

Im Folgenden werden Ausführungsbeispiele der Erfindung anhand von Zeichnungen näher erläutert. Darin zeigen:
- FIG 1: ein Impulsdiagramm zur Veranschaulichung eines Verfahrens zum Betrieb eines Prozessors in einer Echtzeitumgebung mit bekanntem Zeitintervall zwischen zwei aufeinanderfolgenden Echtzeitereignissen, und
- FIG 2: eine Echtzeitumgebung mit einer motorbetriebenen Komponente, die eine Strecke abfährt, wobei die Position der Komponente durch einen Sensor und einen Hilfssensor überwacht wird.

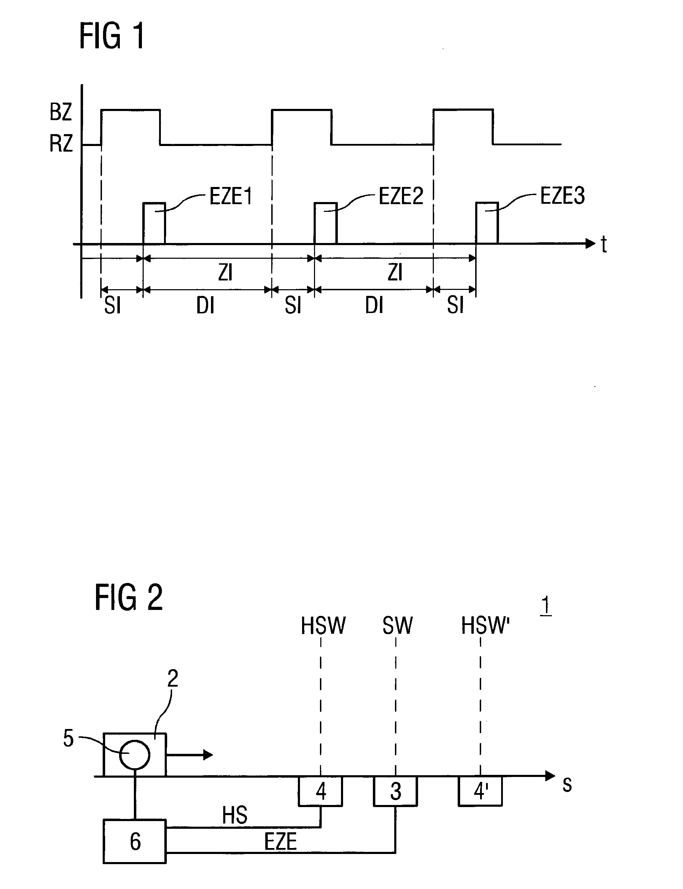

Figur 1 zeigt ein Impulsdiagramm zur Veranschaulichung eines Verfahrens zum Betrieb eines Prozessors in einer Echtzeitumgebung mit bekanntem Zeitintervall ZI zwischen zwei aufeinanderfolgenden Echtzeitereignissen EZE1, EZE2, EZE3.

Zum Zeitpunkt des Auftretens des Echtzeitereignisses EZE1 befindet sich der Prozessor in einem Betriebszustand BZ und verbleibt dort zur Bearbeitung des Echtzeitereignisses EZE1. Nach der Bearbeitung wird der Prozessor in den Ruhezustand RZ geschaltet. Das Zeitintervall ZI zwischen je zwei aufeinanderfolgenden Echtzeitereignissen EZE1, EZE2, EZE3 ist bekannt. Es wird ein Differenzintervall DI aus dem Zeitintervall ZI abzüglich eines Sicherheitsintervalls SI bestimmt. Nach Ablauf des Differenzintervalls DI wird der Prozessor wieder in den Betriebszustand BZ versetzt, um für die Bearbeitung des nächsten Echtzeitereignisses EZE2 bereit zu sein. Der Ablauf wiederholt sich für das Echtzeitereignis EZE3 und gegebenenfalls weitere Echtzeitereignisse.

Vorzugsweise wird das Sicherheitsintervall SI in einem Bereich zwischen 10 % und 30 %, insbesondere 20 % der Dauer des bekannten Zeitintervalls ZI gewählt. Beispielsweise kann das bekannte Zeitintervall ZI fünf Sekunden betragen. Als Sicherheitsintervall SI wird dann beispielsweise eine Sekunde gewählt, so dass der Prozessor bis zum Ablauf des Differenzintervalls DI von vier Sekunden in den Ruhezustand RZ geschaltet wird.

Figur 2 zeigt eine Echtzeitumgebung 1 mit einer motorbetriebenen Komponente 2, die eine Strecke s abfährt, wobei die Position der Komponente 2 durch einen Sensor 3 und einen Hilfssensor 4 überwacht wird. Ein Antriebsmotor 5 der Komponente 2 wird von einem Prozessor 6 gesteuert. In der in Figur 2 gezeigten Position ist der Prozessor 6 in den Ruhezustand geschaltet, nachdem er gegebenenfalls ein vorhergehendes Echtzeitereignis bearbeitet hat.

Während des Abfahrens der Strecke s erreicht die motorbetriebene Komponente 2 zunächst die Position des Hilfssensors 4, was dieser als Überschreiten eines Hilfsschwellwertes HSW detektiert, woraufhin er ein Hilfssignal HS generiert, mittels dessen der Prozessor 6 in den Betriebszustand BZ geschaltet wird.

Die motorbetriebene Komponente 2 setzt ihre Bewegung fort und erreicht die Position des Sensors 3, was dieser als Überschreiten eines Schwellwertes SW detektiert, woraufhin er ein Signal generiert, welches ein Echtzeitereignis EZE darstellt. Der Prozessor ist zu diesem Zeitpunkt bereits im Betriebszustand BZ, damit er auf das Echtzeitereignis EZE reagieren kann. Beispielsweise schaltet der Prozessor 6 den Antriebsmotor 5 infolge des Echtzeitereignisses EZE ab.

Der Hilfsschwellwert HSW ist so gewählt, dass er während der Änderung des Wertes der Größe vor dem Schwellwert SW erreicht wird.

Die vom Sensor 3 und vom Hilfssensor 4 überwachte Größe kann eine Strecke s oder eine andere Größe sein.

Jedem Sensor 3 können zwei Hilfssensoren 4, 4' zugeordnet werden, von denen einer die Überschreitung des vorgegebenen Hilfsschwellwertes HSW der Größe vor Überschreitung des Schwellwertes SW detektiert, wobei der andere Hilfssensor 4' die Unterschreitung eines anderen Hilfsschwellwertes HSW' der Größe vor Unterschreitung des Schwellwertes SW detektiert. Beispielsweise kann so eine Annäherung der Komponente 2 an die Position des Sensors 3 aus zwei Richtungen detektiert werden.

## Patentansprüche

1. Verfahren zum Betrieb eines Prozessors (6) in einer Echtzeitumgebung (1), wobei der Prozessor (6) nach Behandlung eines Echtzeitereignisses (EZE, EZE1 bis EZE3) von einem Betriebszustand (BZ) in einen Ruhezustand (RZ) geschaltet wird, wobei ein Hilfssignal (HS) bei einem nahe bevorstehenden Eintreten eines nachfolgenden Echtzeitereignisses (EZE, EZE1 bis EZE3) generiert wird, mittels dessen der Prozessor (6) vor dem Eintreten des nachfolgenden Echtzeitereignisses (EZE, EZE1 bis EZE3) in den Betriebszustand (BZ) geschaltet wird, **dadurch gekennzeichnet, dass** der Prozessor (6) Echtzeitereignisse (EZE) in Form eines Signals mindestens eines Sensors (3) behandelt, wobei das Signal vom Sensor (3) generiert wird, wenn dieser eine Überschreitung oder Unterschreitung eines vorgegebenen Schwellwertes (SW) einer Größe (s) detektiert, wobei der Prozessor (6) nach Behandlung eines Echtzeitereignisses (EZE) von einem Betriebszustand (BZ) in einen Ruhezustand (RZ) geschaltet wird, wobei mittels mindestens eines Hilfssensors (4, 4') eine Überschreitung beziehungsweise Unterschreitung eines vorgegebenen Hilfsschwellwertes (HSW, HSW') der Größe (s) detektiert und vom Hilfssensor (4) das Hilfssignal (HS) generiert wird, wobei der Hilfsschwellwert (HSW, HSW') während der Änderung des Wertes der Größe (s) vor dem Schwellwert (SW) erreicht wird.

2. Verfahren nach Anspruch 1,
**dadurch gekennzeichnet, dass** das Hilfssignal (HS) von einem Zeitgeber generiert wird, wobei der Prozessor (6) vom Zeitgeber nach Ablauf eines Differenzintervalls (DI), das ein bekanntes Zeitintervall (ZI) zwischen zwei aufeinanderfolgenden Echtzeitereignissen (EZE1 bis EZE3) abzüglich eines Sicherheitsintervalls (SI) umfasst, in den Betriebszustand (BZ) geschaltet wird.

3. Verfahren nach Anspruch 2,
**dadurch gekennzeichnet, dass** das Sicherheitsintervall (SI) in einem Bereich zwischen 10 % und 30 %, vorzugsweise 20 % der Dauer des bekannten Zeitintervalls (ZI) zwischen zwei aufeinanderfolgenden Echtzeitereignissen (EZE1 bis EZE3) gewählt wird.

4. Verfahren nach Anspruch 1,
**dadurch gekennzeichnet, dass** die vom Sensor (3) und vom Hilfssensor (4) überwachte Größe eine Strecke (s) ist, wobei der Schwellwert (SW) eine Position ist, deren Erreichen oder Überschreiten das Echtzeitereignis (EZE) darstellt.

5. Verfahren nach einem der Ansprüche 1 oder 4,
**dadurch gekennzeichnet, dass** der Prozessor (6) während der Behandlung des Echtzeitereignisses (EZE) einen Antriebsmotor (5) abschaltet, wobei der Antriebsmotor (5) während seines Betriebs die Änderung der Größe (s) bewirkt.

6. Verfahren nach einem der Ansprüche 1, 4 oder 5,
**dadurch gekennzeichnet, dass** jedem Sensor (3) zwei Hilfssensoren (4, 4') zugeordnet werden, von denen einer die Überschreitung des vorgegebenen Hilfsschwellwertes (HSW) der Größe (s) vor Überschreitung des Schwellwertes (SW) detektiert, wobei der andere Hilfssensor (4') die Unterschreitung eines anderen vorgegebenen Hilfsschwellwertes (HSW') der Größe (s) vor Unterschreitung des Schwellwertes (SW) detektiert.

7. Verwendung eines Verfahrens nach einem der Ansprüche 1 bis 6 in einem Roboter.

## Claims

1. Method for operating a processor (6) in a real-time environment (1), wherein the processor (6), after handling a real-time event (EZE, EZE1 to EZE3), is switched from an operating state (BZ) to a non-operating sleep state (RZ), wherein an auxiliary signal (HS) is generated for an imminent occurrence of a subsequent real-time event (EZE, EZE1 to EZE3), and wherein the processor (6) is switched to the operating state (BZ) by means of said auxiliary signal (HS) before the subsequent real-time event (EZE, EZE1 to EZE3) occurs, **characterised in that** the processor (6) handles real-time events (EZE) in the form of a signal from at least one sensor (3), wherein the signal is generated by the sensor (3) if the latter detects that a predefined threshold value (SW) of a variable (s) has been exceeded or undershot, wherein the processor (6), after handling a real-time event (EZE), is switched from an operating state (BZ) to a non-operating sleep state (RZ), wherein an exceeding or undershooting of a predefined auxiliary threshold value (HSW, HSW') of the variable (s) is detected by means of at least one auxiliary sensor (4, 4') and the auxiliary signal (HS) is generated by the auxiliary sensor (4), wherein during the change in the value of the variable (s) the auxiliary threshold value (HSW, HSW') is reached before the threshold value (SW).

2. Method according to claim 1,
**characterised in that** the auxiliary signal (HS) is generated by a timer, wherein the processor (6) is switched to the operating state (BZ) by the timer after expiration of a difference interval (DI) which comprises a known time interval (ZI) between two successive real-time events (EZE1 to EZE3) less a safety interval (SI).

3. Method according to claim 2,
**characterised in that** the chosen safety interval (SI) lies in a range between 10 % and 30 %, preferably 20 %, of the duration of the known time interval (ZI) between two successive real-time events (EZE1 to EZE3).

4. Method according to claim 1,
**characterised in that** the variable monitored by the sensor (3) and by the auxiliary sensor (4) is a route (s), wherein the threshold value (SW) is a position which, upon being reached or exceeded, represents the real-time event (EZE).

5. Method according to one of claims 1 or 4,
**characterised in that** during the handling of the real-time event (EZE) the processor (6) switches off a drive motor (5), wherein during its operation the drive motor (5) effects the change in the variable (s).

6. Method according to one of claims 1, 4 or 5,
**characterised in that** each sensor (3) is assigned two auxiliary sensors (4, 4'), of which one detects the exceeding of the predefined auxiliary threshold value (HSW) of the variable (s) before the threshold value (SW) is exceeded, while the other auxiliary sensor (4') detects the undershooting of another predefined auxiliary threshold value (HSW') of the variable (s) before the threshold value (SW) is undershot.

7. Use of a method according to one of claims 1 to 6 in a robot.

## Revendications

1. Procédé pour faire fonctionner un processeur (6) dans un environnement (1) en temps réel, le processeur (6) passant, après le traitement d'un événement (EZE, EZE1 à EZE3) en temps réel, d'un état (BZ) de fonctionnement à un état (RZ) de repos, un signal (HS) auxiliaire étant produit à la survenance presque imminente d'un événement (EZE, EZE1 à EZE3) en temps réel suivant, au moyen duquel le processeur (6) est mis dans l'état (BZ) de fonctionnement avant que l'événement (EZE, EZE1 à EZE3) en temps réel suivant ne survienne, **caractérisé en ce que** le processeur (6) traite des événements (EZE) en temps réel sous la forme d'un signal d'au moins un capteur (3), le signal étant produit par le capteur (3) lorsque celui-ci détecte un dépassement par le haut ou par le bas d'une valeur (SW) de seuil donnée à l'avance d'une grandeur (s), le processeur (6) passant, après le traitement d'un événement (EZE) en temps réel, d'un état (BZ) de fonctionnement à un état (RZ) de repos, dans lequel, au moyen d'au moins un capteur (4, 4') auxiliaire, un dépassement par le haut ou par le bas d'une valeur (HSW, HSW') auxiliaire de seuil donnée à l'avance de la grandeur (s) est détecté et le signal (HS) auxiliaire est produit par le capteur (4) auxiliaire, la valeur (HSW, HSW') auxiliaire étant atteinte pendant la variation de la valeur de la grandeur (s) avant la valeur (SW) de seuil.

2. Procédé suivant la revendication 1,
**caractérisé en ce que** le signal (HS) auxiliaire est produit par une horloge, le processeur (6) étant mis dans l'état (BZ) de fonctionnement par l'horloge, après expiration d'un intervalle (DI) différentiel, qui comprend un intervalle (ZI) de temps connu entre deux événements (EZE1 à EZE3) en temps réel successifs diminué d'un intervalle (SI) de sécurité.

3. Procédé suivant la revendication 2,
**caractérisé en ce que** l'intervalle (SI) de sécurité est choisi dans une plage comprise entre 10% et 30%, de préférence de 20% de la durée de l'intervalle (ZI) de temps connu entre deux événements (EZE1 à EZE3) en temps réel successifs.

4. Procédé suivant la revendication 1,
**caractérisé en ce que** la grandeur contrôlée par le capteur (3) et par le capteur (4) auxiliaire est une distance (s), la valeur (SW) de seuil étant une position, dont l'atteinte ou le dépassement représente l'événement (EZE) en temps réel.

5. Procédé suivant l'une des revendications 1 à 4, **caractérisé en ce que** le processeur (6) arrête, pendant le traitement de l'événement (EZE) en temps réel, un moteur (5) d'entraînement, le moteur (5) d'entraînement provoquant, pendant son fonctionnement, la variation de la grandeur (s).

6. Procédé suivant l'une des revendications 1, 4 ou 5,
**caractérisé en ce qu'**à chaque capteur (3) sont associés deux capteurs (4, 4') auxiliaires, dont l'un détecte le dépassement par le haut de la valeur (HSW) de seuil auxiliaire donnée à l'avance de la grandeur (s) avant le dépassement par le haut de la valeur (SW) de seuil, tandis que l'autre capteur (4') auxiliaire détecte le dépassement par le bas d'une autre valeur (HSW') de seuil auxiliaire donnée à l'avance de la grandeur (s) avant le dépassement par le bas de la valeur (SW) de seuil.

7. Utilisation d'un procédé suivant l'une des revendications 1 à 6 dans un robot.
